# EUROPÄISCHE PATENTANMELDUNG

(11) **EP 2 330 045 A2**
(43) Veröffentlichungstag der Anmeldung: **08.06.2011**
(21) Anmeldenummer: 10015324.6
(22) Anmeldetag: 06.12.2010
(51) Int. Cl.: B65D 21/08, B65D 83/00

(54) **Behälter mit höhenverstellbarem Boden**

(30) Priorität: 07.12.2009 DE 102009057044; 12.06.2010 DE 102010023595
(71) Anmelder: Hessemer, Frank, 66271 Kleinblitterdorf (DE)
(72) Erfinder: Hessemer, Frank, 66271 Kleinblitterdorf (DE)
(74) Vertreter: Bernhardt, Reinold

(57) **Zusammenfassung**

Die Erfindung betrifft einen Behälter mit höhenverstellbarem Boden (5). Erfindungsgemäß ist der Behälter gekennzeichnet durch wenigstens eine Spindel (9) mit einer Spindelmutter (10) und einem Antrieb (12-15, 18) zur Drehung der Spindel (9) oder Spindelmutter, wobei sich die Spindelmutter (10) oder die Spindel unter Höhenverstellung des Behälterbodens (5) in Richtung der Drehachse verschiebt. Vorzugsweise sind mehrere Spindeln (9) mit je einer Spindelmutter (10) vorgesehen und der Antrieb (12-15, 18) weist einen Antriebsstrang (13) zur gemeinsamen Drehung der Spindeln (9) oder Spindelmuttern auf.

## Beschreibung

Die Erfindung betrifft einen Behälter mit höhenverstellbarem Boden.

Derartige Behälter sind beispielsweise aus der DE 10 2004 048 428 A1 bekannt. Sie dienen insbesondere dazu, Verkaufsware stets gut sichtbar und bequem entnehmbar zu präsentieren, indem der Behälterboden mit zunehmender Entleerung des Behälters angehoben wird. Zur Verstellung der Höhe des Bodens dienen z.B. motorgetriebene Scherenhebeeinrichtungen oder pneumatische Kissen.

Bei solchen Behältern besteht das Problem, den möglichst nahe an die vertikalen Seitenwände heranreichenden Behälterboden exakt vertikal und dadurch verkantungsfrei anheben bzw. absenken zu können.

Der Erfindung liegt die Aufgabe zugrunde, einen neuen Behälter mit höhenverstellbarem Boden zu schaffen, der eine exaktere, problemlosere Verstellung der Bodenhöhe als die bekannten derartigen Behälter ermöglicht.

Der diese Aufgabe lösende Behälter nach der Erfindung ist gekennzeichnet durch wenigstens eine Spindel mit einer Spindelmutter und einem Antrieb zur Drehung der Spindel oder Spindelmutter, wobei die Spindelmutter oder die Spindel den Behälterboden unter Verstellung seiner Höhe translatorisch bewegt.

Durch eine solche, auf einer Spindel und einer Spindelmutter basierenden Hebeeinrichtung lässt sich der Behälterboden exakt vertikal verkantungsfrei verschieben. Während es möglich wäre, die Spindelmutter zu ihrer translatorischen Verschiebung auf einer in axialer Richtung feststehenden Spindel zu drehen oder den Behälterboden bei feststehender Spindelmutter unter axialer Verschiebung der gedrehten Spindel durch die Spindel selbst zu verschieben, ist in einer bevorzugten Ausführungsform der Erfindung der Antrieb zur Drehung der Spindel und die auf der Spindel verschobene Spindelmutter zur translatorischen Bewegung des Behälterbodens vorgesehen.

Während im einfachsten Fall eine einzige, z.B. zu einem runden Behälterboden koaxiale Spindel, die in den Behälterraum hineinragt, zur Verstellung des Behälterbodens genügen kann, weist in der bevorzugten Ausführungsform der Erfindung der Behälter mehrere Spindeln mit je einer Spindelmutter auf und der Antrieb umfasst einen Antriebsstrang zur gemeinsamen Drehung der Spindeln oder Spindelmuttern. Alternativ zu einem Antriebsstrang zur gemeinsamen Drehung könnte jeder Spindel ein gesonderter Antriebsmotor zugeordnet sein, wobei die Antriebsmotoren untereinander synchronisiert sind.

Bei dem vorzugsweise endlosen Antriebsstrang kann es sich z.B. um eine Kette oder einen Zahnriemen handeln, die bzw. der an einem zur Spindel koaxialen Ketten- bzw. Zahnrad angreift. So lassen sich durch den gemeinsamen Antriebsstrang alle Spindeln oder Spindelmuttern exakt synchron drehen.

Vorzugsweise sind die Spindeln am Rand des Behälterbodens und insbesondere jeweils in einem Eckenbereich des Behälterbodens angeordnet, so dass sie nicht störend in den Behälterraum hineinragen. Zweckmäßig sind die Spindeln an ihrem unteren Ende leichtgängig um die Spindelachse drehbar gelagert. Insbesondere weisen die Spindeln an ihrem unteren Ende eine Rundung oder Spitze auf, die eine leichtgängige Drehung sichert.

In weiterer Ausgestaltung der Erfindung können die Spindelmuttern starr oder drehbeweglich mit dem Behälterboden verbunden sein. In einer Ausführungsform kann der Behälterboden auf den Spindelmuttern nur aufliegen.

In einer Ausführungsform der Erfindung umfasst der Behälterboden z.B. zwei Träger, die sich vorzugsweise kreuzen. Ein solcher Behälterboden kann außerordentlich stabil ausgebildet sein, was zur verkantungsfreien Höhenverstellung des Bodens beiträgt.

Zweckmäßig sind die Spindelmuttern mit Enden der Träger verbunden.

Die Spindeln sind zweckmäßig durch wenigstens eine koaxiale Spindelführung geführt, wobei solche Spindelführungen neben den Spindelmuttern an den Enden der Träger angebracht sein können.

In einer weiteren Ausführungsform der Erfindung können zur Lagerung der Spindeln ein Lagerelement nahe ihrem oberen Ende und Lagerelemente nahe ihrem unteren Ende vorgesehen sein, wobei ein mit dem Antriebsstrang zur gemeinsamen Drehung der Spindeln im Eingriff stehendes Antriebsrad, vorzugsweise Kettenrad, zwischen den Lagerelementen nahe dem unteren Ende angeordnet ist. Die Anordnung des Antriebsrads zwischen den nahe beieinander liegenden Lagerelementen verleiht dem Spindelantrieb eine hohe, dessen einwandfreie Funktion sichernde Formstabilität.

Zwischen den Lagerelementen nahe dem unteren Ende von wenigstens einer der Spindeln kann ferner ein Zahnrad, vorzugsweise ein Kettenrad, für den Drehantrieb der betreffenden Spindel durch eine Motor-/Getriebeeinheit vorgesehen sein. Auch die Anordnung dieses Zahnrades zwischen den nahe beieinander liegenden Lagerelementen sichert eine hohe Formstabilität.

Zweckmäßig sind die nahe dem unteren Spindelelement angeordneten Lagerelemente auf einem an die übrige Spindel angekoppelten Verlängerungsstück angeordnet. Diese Maßnahme erlaubt eine bequeme Montage der betreffenden Antriebselemente.

Nahe dem oberen Ende von wenigstens einer der Spindeln kann ein Getriebe zur Drehung der betreffenden Spindel manuell oder mit Hilfe eines ankoppelbaren Drehantriebs vorgesehen sein. Ein solches Getriebe, das vorzugsweise als Schneckengetriebe mit einer von Hand oder durch den Drehantrieb drehbaren Schneckenantriebswelle ausgebildet ist, kann alternativ zu dem vorangehend genannten Antrieb eingesetzt werden.

Die Erfindung wird nachfolgend anhand eines Ausführungsbeispiels und der beiliegenden, sich auf dieses Ausführungsbeispiel beziehenden Zeichnungen weiter erläutert. Es zeigen:

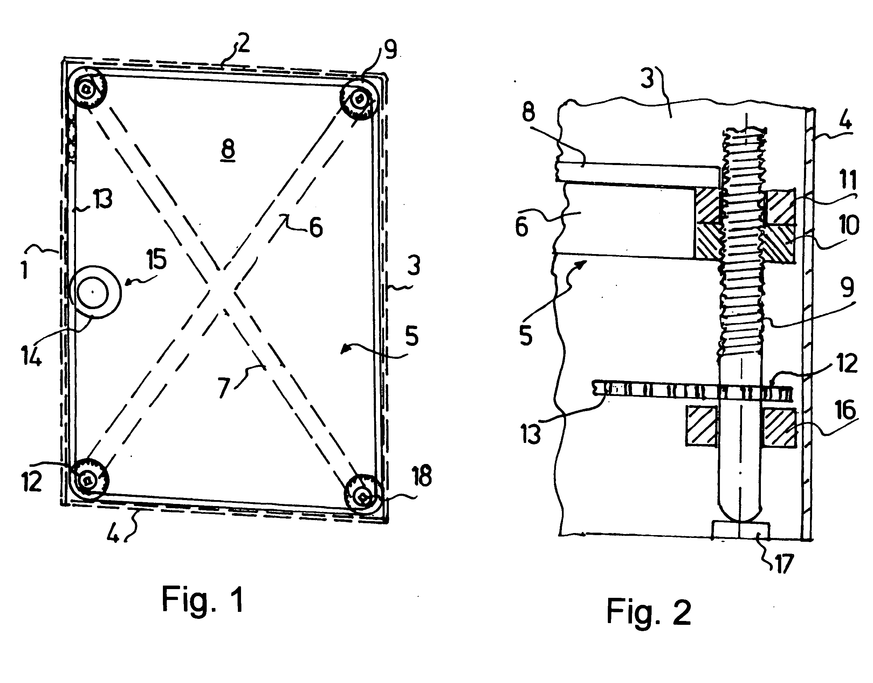

- Fig. 1: eine Schemadarstellung eines erfindungsgemäßen Behälters in einer Drauf- sicht,
- Fig. 2: eine Detailansicht des Behälters von Fig. 1, die einen unteren Eckenbereich erfasst,
- Fig. 3: ein weiteres Ausführungsbeispiel für einen erfindungsgemäßen Behälter,
- Fig. 4: einen unteren Eckenbereich des Behälters von Fig. 3 mit einer Spindel,
- Fig. 5: ein zur Anordnung am oberen Ende der Spindel von Fig. 2 vorgesehenes Schneckengetriebe,

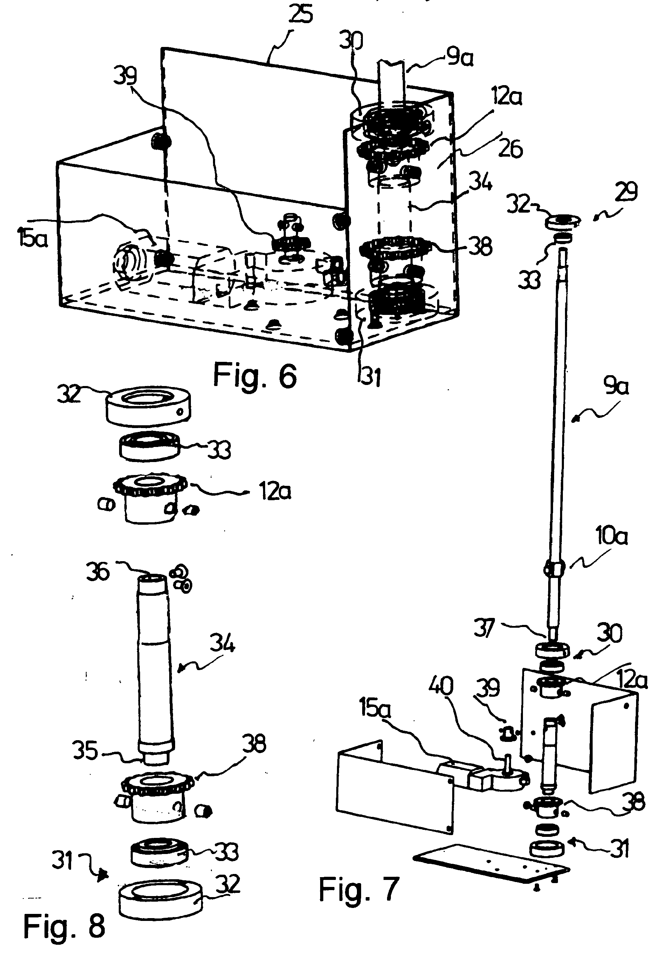

- Fig. 6: den in Fig. 5 gezeigten unteren Eckenbereich in vergrößerter Darstellung,
- Fig. 7: den unteren Eckenbereich mit der Spindel von Fig. 4 in einer Explosions- darstellung, und
- Fig. 8: eine Detaildarstellung der Ansicht von Fig. 7.

Ein quaderförmiger Behälter weist vertikale Seitenwände 1 bis 4 und einen Behälterboden 5 auf. Der Behälterboden 5 umfasst in dem gezeigten Ausführungsbeispiel neben einer durchgehenden Bodenwand 8 zwei sich kreuzende, unter der Bodenwand angeordnete Träger 6 und 7.

In den vier Eckenbereichen des Behälters ist jeweils eine vertikale Spindel 9 mit einer auf der Spindel drehbaren Spindelmutter 10 angeordnet. Die vier Spindelmuttern 10 sind jeweils starr mit einem Ende der betreffenden Träger 6 und 7 verbunden. Oberhalb der Spindelmuttern 10 ist jeweils eine Spindelführung 11 vorgesehen, die ebenfalls starr mit dem jeweiligen Trägerende verbunden ist.

Unterhalb des Behälterbodens 5 weist jede der Spindeln 9 ein zur Spindeldrehachse koaxiales Kettenrad 12 auf. Alle vier Kettenräder 12 verbindet ein endloser, in dem betreffenden Ausführungsbeispiel durch eine Kette 13 gebildeter Antriebsstrang. Die Kette 13 steht im Eingriff mit einem Antriebskettenrad 14 einer elektrischen Motor-/ Getriebeeinheit 15.

Unterhalb der Kettenräder 9 ist jeweils eine weitere Spindelführung 16 gebildet. Das untere, abgerundete Ende der Spindeln 9 sitzt jeweils auf einem Lagerblock 17 auf. Die Motor-/Getriebeeinheit 15, die vier Spindelführungen 16 und die vier Lagerblöcke 17 sind an einem unterhalb des Behälterbodens 15 angeordneten Trägergestell des Behälters (nicht gezeigt) angebracht.

Die Spindeln 9 weisen an ihrer oberen Stirnfläche jeweils eine Einsenkung 18 z.B. mit einem Sechs- oder Vierkantquerschnitt für den Eingriff eines Drehwerkzeugs auf.

Zur Verstellung der Höhe des Behälterbodens 5 kann die Motor-/Getriebeeinheit 15 in Betrieb genommen oder eine der Spindeln 9 von Hand gedreht werden. In beiden Fällen erfolgt synchron eine Drehung aller vier Kettenräder 12 durch die Kette 13. Hierdurch ergibt sich eine gleichmäßige Verschiebung der vier Spindelmuttern 10 auf den Spindeln 9 und damit eine, an allen vier Ecken gleichmäßige und verkantungsfreie Anhebung oder Absenkung des Behälterbodens 5. Die sich kreuzenden Träger 6 und 7 verleihen dem Behälterboden eine hohe Stabilität, die zusätzlich zusammen mit den Spindelführungen 11,16 eine verkantungsfreie, leichtgängige Vertikalbewegung des Behälterbodens 5 fördert.

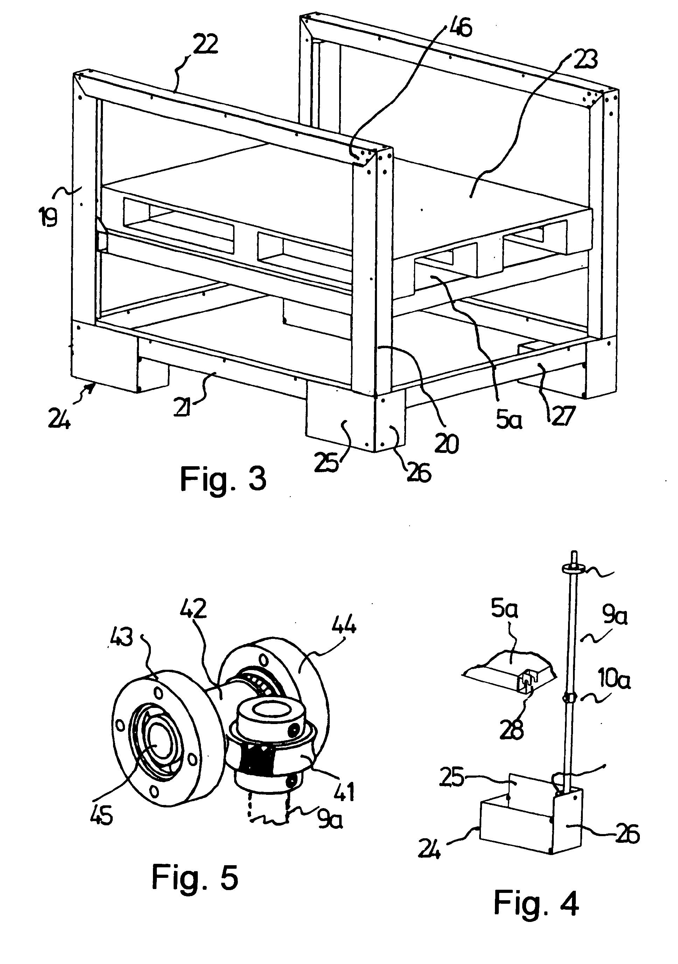

Ein in Fig. 3 gezeigter Behälter mit einem Boden 5a ist gestellartig mit offenen Seitenwänden ausgebildet. Zwei der Seitenwände bestehen lediglich aus vertikalen Rahmenteilen 19 und 20 sowie horizontalen Rahmenteilen 21 und 22. An den beiden anderen Behälterseiten fehlen obere horizontale Rahmenteile, so dass von diesen Seiten her eine über die Behälterhöhe hinaus beladene Palette 23 in den Behälter einführbar ist und auf dem Boden 5a abgesetzt werden kann. Die Seitenwände könnten um horizontale Achsen umlegbar sein.

Die horizontalen Rahmenteile 21,22 sind durch ein Kastenprofil gebildet, während die vertikalen Rahmenteile jeweils ein U-Profil mit unterschiedlich langen U-Schenkeln aufweisen.

An den unteren vier Behälterecken ist jeweils ein Fußteil 24 in Form eines nach oben offenen Kastens angebracht. Nach außen weisende Seitenwände 25 und 26 der Fußteile ragen in der Höhe über die übrigen Seitenwände hinaus und bilden Laschen zur außenseitigen Befestigung an einem durch die Rahmenteile 21 und zwei weitere Rahmenteile 27 gebildeten Grundrahmen.

Innerhalb der vertikalen Rahmenschenkel 19,20 erstreckt sich jeweils eine Spindel 9a, auf der eine durch Drehung der Spindel vertikal bewegbare Spindelmutter 10α sitzt. Wie Fig. 4 erkennen lässt, ist der Behälterboden 5a über vorstehende, in die U-förmigen Rahmenteile 19,20 eingreifende Hakenelemente 28 an Zapfen einhängbar, die von der Spindelmutter 10α seitlich vorstehen.

Zur Halterung und drehbaren Lagerung der Spindel 9a sind jeweils drei Lagerelemente 29 bis 31 vorgesehen, wobei die Lagerelemente 29 nahe dem oberen Ende der Spindel und die Lagerelemente 30,31 nahe dem unteren Spindelende angeordnet sind. Die Lagerelemente 29 bis 31 bestehen aus je einem Haltering 32 mit einem Sitz für die Aufnahme eines Kugellagers 33.

Die Spindel 9a umfasst ein gewindefreier Verlängerungsstück 34, das mit einem zur Spindelachse koaxialen Endzapfen 35 in das Kugellager 33 des untersten Lagerelements 31 eingreift. Am oberen Ende des Verlängerungsstücks ist eine zur Spindelachse koaxiale Stirneinsenkung 36 für den Eingriff eines Endzapfens 37 am unteren Ende des oberen Spindelteils vorgesehen.

Das Verlängerungsstück 34 trägt nahe seinem oberen Ende unterhalb des Lagerelements 30 ein erstes Kettenrad 12a und nahe seinem unteren Ende über dem Lagerelement 31 ein zweites Kettenrad 38. Die Kettenräder 12a aller vier Spindeln sind über eine (nicht gezeigte) umlaufende Kette miteinander verbunden. Das Kettenrad 38 von einer der vier Spindeln steht über eine (nicht gezeigte) Kette in Verbindung mit einem Kettenrad 39, das auf einem Antriebszapfen 40 einer Motor-/ Getriebeeinheit 15a sitzt.

Ein in Fig. 5 gezeigtes Zahnrad 41 ist koaxial zur Spindelachse auf einer der vier Spindeln 9a an deren oberem Ende oberhalb des betreffenden Lagerelements 29 angeordnet. Das Zahnrad 41 steht im Eingriff mit einer Schneckenantriebswelle 42, die an ihren Enden durch Drehlagerelemente 43 und 44 axial festgelegt ist. Die Drehlagerelemente lassen sich bei 46 innerhalb der vertikalen oder/und horizontalen Rahmenteile 19,20,22 durch Schrauben befestigen. Über eine stirnseitige Eingriffsöffnung 45 ist die Welle 42, z.B. mit Hilfe eines Werkzeugs, ggf. elektromechanischen Werkzeugs, drehbar.

Durch die Motor-/Getriebeeinheit 15a lässt sich über den genannten, die Kettenräder 38 und 39 umfassenden Kettenantrieb die entsprechende Spindel 9a in Drehung versetzen. Über das Kettenrad 12a und die (nicht gezeigte) Kette wird diese Drehung auch auf die übrigen drei Spindeln übertragen. Die Spindelmuttern 10a bewegen sich gleichmäßig nach oben oder unten. Entsprechend hebt oder senkt sich der Boden 5a.

Die Lagerelemente 29 bis 31 sind über ihren Haltering 32 mit den betreffenden Rahmenteilen bzw. dem Boden des Fußteils 24 verbunden. Entsprechend stabil sind die Spindeln 9a gelagert. Der gesamte Antrieb bleibt formstabil.

Der Boden 5a lässt sich ferner über den das Zahnrad 41 und die Schneckenwelle 42 umfassenden Schneckenantrieb verstellen, von Hand oder mit Hilfe eines Elektrowerkzeugs.

## Patentansprüche

1. Behälter mit höhenverstellbarem Boden (5),
**gekennzeichnet durch** wenigstens eine Spindel (9) mit einer Spindelmutter (10) und einem Antrieb (12-15, 18) zur Drehung der Spindel (9) oder Spindelmutter, wobei die Spindelmutter (10) oder Spindel den Behälterboden (5) unter Verstellung seiner Höhe translatorisch bewegt.

2. Behälter nach Anspruch 1,
**dadurch gekennzeichnet,**
**dass** der Antrieb (12-15, 18) zur Drehung der Spindel (9) und die Spindelmutter (10) zur translatorischen Bewegung des Behälterbodens (5) vorgesehen ist.

3. Behälter nach Anspruch 1 oder 2,
**dadurch gekennzeichnet,**
**dass** mehrere Spindeln (9) mit je einer Spindelmutter (10) vorgesehen sind und der Antrieb (12-15, 18) einen Antriebsstrang (13) zur gemeinsamen Drehung der Spindeln (9) oder Spindelmuttern umfasst.

4. Behälter nach Anspruch 3,
**dadurch gekennzeichnet,**
**dass** der, vorzugsweise endlose, Antriebsstrang eine Kette (13) oder einen Zahnriemen umfasst.

5. Behälter nach Anspruch 3 oder 4,
**dadurch gekennzeichnet,**
**dass** die Spindeln (9) am Rand des Behälterbodens (5) und insbesondere jeweils in einem Eckenbereich des Behälters angeordnet sind.

6. Behälter nach einem der Ansprüche 3 bis 5,
**dadurch gekennzeichnet,**
**dass** die Spindeln (9) an ihrem unteren Ende um die Spindelachse drehbar gelagert sind.

7. Behälter nach einem der Ansprüche 1 bis 6,
**dadurch gekennzeichnet,**
**dass** die Spindelmutter starr oder drehbeweglich mit dem Behälterboden (5) verbunden ist.

8. Behälter nach einem der Ansprüche 1 bis 7,
**dadurch gekennzeichnet,**
**dass** der Behälterboden (5) eine durchgehende Bodenwand (8) abstützende Träger (6,7) umfasst, die sich vorzugsweise kreuzen.

9. Behälter nach Anspruch 8,
**dadurch gekennzeichnet,**
**dass** die Spindelmuttern (10) mit den Enden der Träger (6,7) verbunden sind.

10. Behälter nach einem der Ansprüche 1 bis 9,
**dadurch gekennzeichnet,**
**dass** wenigstens eine die Spindel umgebende Spindelführung (11,16) vorgesehen ist und insbesondere an den Enden der Träger (6,7) neben der Spindelmutter (10) eine Spindelführung (11) angebracht ist.

11. Behälter nach einem der Ansprüche 3 bis 10,
**dadurch gekennzeichnet,**
**dass** zur Lagerung der Spindel (9a) ein Lagerelement (29) nahe ihrem oberen Ende sowie Lagerelemente (30,31) nahe ihrem unteren Ende vorgesehen sind, und dass ein mit dem Antriebsstrang zur gemeinsamen Drehung der Spindeln (9a) im Eingriff stehendes Antriebsrad, vorzugsweise Kettenrad (12a), zwischen den Lagerelementen (30,31) nahe dem unteren Spindelende angeordnet ist.

12. Behälter nach Anspruch 11,
**dadurch gekennzeichnet,**
**dass** zwischen den Lagerelementen (30,31) nahe dem unteren Spindelende von wenigstens einer der Spindeln (9a) ferner ein Zahnrad, vorzugsweise Kettenrad (38), für den Drehantrieb der betreffenden Spindel (9a) durch eine Motor-/ Getriebeeinheit (15a) vorgesehen ist.

13. Behälter nach Anspruch 11 oder 12,
**dadurch gekennzeichnet,**
**dass** die nahe dem unteren Spindelende vorgesehenen Lagerelemente (30,31) auf einem an die übrige Spindel (9a) angekoppelten Verlängerungsstück (34) angeordnet sind.

14. Behälter nach einem der Ansprüche 11 bis 13,
**dadurch gekennzeichnet,**
**dass** nahe dem oberen Ende von wenigstens einer der Spindeln (9a) ein Getriebe zur Drehung der betreffenden Spindel (9a) manuell oder durch einen ankoppelbaren elektromechanischen Drehantrieb vorgesehen ist.

15. Behälter nach Anspruch 14,
**dadurch gekennzeichnet,**
**dass** das Getriebe ein Schneckengetriebe mit einer manuell oder durch den Drehantrieb drehbaren Schneckenantriebswelle (42) ist.
